# EUROPEAN PATENT APPLICATION

(11) **EP 4 675 428 A1**
(43) Date of publication of application: **07.01.2026**
(21) Application number: 24769806.1
(22) Date of filing: 05.03.2024
(51) Int. Cl.: G06F 9/48

(54) **TASK PROCESSING METHOD AND CHIP**

(30) Priority: 16.03.2023 CN 202310317498
(71) Applicant: HUAWEI TECHNOLOGIES CO., LTD., Shenzhen, Guangdong 518129 (CN)
(72) Inventor: LIAO, Heng, Shenzhen, Guangdong 518129 (CN); LIU, Hu, Shenzhen, Guangdong 518129 (CN); REN, Yi, Shenzhen, Guangdong 518129 (CN); XIONG, Lejin, Shenzhen, Guangdong 518129 (CN); LIU, Jianan, Shenzhen, Guangdong 518129 (CN)
(74) Representative: Maiwald GmbH
(86) International application number: PCT/CN2024/080161
(87) International publication number: WO 2024/188112

(57) **Abstract**

Embodiments of this application provide a task processing method and a chip, and relate to the field of computer technologies. The task processing method includes: separately placing, in a plurality of instruction queues that are in a one-to-one correspondence with a plurality of execution units, all instructions in an instruction sequence used to implement a task; determining, based on a relationship identifier corresponding to a restriction instruction at a head of a first instruction queue in the plurality of instruction queues, a processing status of a second instruction queue on which the first instruction queue depends in a data dependency relationship indicated by the relationship identifier; when the processing status is processing completed, extracting the restriction instruction corresponding to the relationship identifier from the first instruction queue, to execute an instruction after the restriction instruction, where the processing status is obtained by updating based on the relationship identifier; and completing processing of the plurality of instruction queues to obtain a processing result of the task. In embodiments of this application, load of a compiler during asynchronous execution of different tasks can be reduced, and task processing efficiency can be improved.

## Description

This application claims priority to Chinese Patent Application No. 202310317498.3, filed with the China National Intellectual Property Administration on March 16, 2023 and entitled "TASK PROCESSING METHOD AND CHIP", which is incorporated herein by reference in its entirety.

### TECHNICAL FIELD

Embodiments of this application relate to the field of computer technologies, and in particular, to a task processing method and a chip.

### BACKGROUND

As a quantity of tasks in fields such as artificial intelligence and cloud computing increases significantly, a plurality of execution units respectively execute a plurality of tasks that have data dependency, to improve processing efficiency. In other words, acceleration chips including an asynchronous execution unit, for example, chips such as a graphics processing unit (graphics processing unit, GPU), a field programmable logic gate array (field programmable gate array, FPGA), and an application-specific integrated circuit (application-specific integrated circuit, ASIC), are widely used.

In a related technology, data dependency between a plurality of tasks causes data dependency between a plurality of execution units, and the plurality of execution units need to perform task processing in an asynchronous execution manner to ensure that the tasks are executed at a correct occasion. For example, an execution unit E0 is configured to execute a task A0, an execution unit E1 is configured to execute a task A1, and the task A1 depends on data output by the task A0. After executing the task A0, the execution unit E0 sends a trigger instruction to the execution unit E1, and the execution unit E1 executes a wait instruction to wait to receive the trigger instruction. In this way, the execution unit E1 may access data output by the execution unit E1 after the execution unit E1 executes the task A0, to execute the task A1. In other words, in the foregoing task processing, a trigger instruction and a wait instruction that are paired need to be maintained between different execution units that have data dependency.

However, in a scenario in which task execution logic is complex, there may be a plurality of conditions for determining whether task execution is completed. In this case, a determining instruction needs to be set for each condition to determine a corresponding task execution status, that is, to determine whether task execution is completed, so as to ensure that a pair of trigger and wait instructions are correctly set for different determining instructions. This approach results in a large amount of determining during task processing, potentially overburdening a compiler and leading to reduced task processing efficiency.

### SUMMARY

To resolve the foregoing technical problem, this application provides a task processing method and a chip. In the task processing method, asynchronous execution between a task and a dependent task can be implemented by using a relationship identifier that is in the task and that indicates a data dependency relationship of the task and a restriction instruction that is set at a head of an instruction queue used to implement the task. This method reduces load of a compiler and improves task processing efficiency.

According to a first aspect, an embodiment of this application provides a task processing method. The method may include: reading all instructions in an instruction sequence used to implement a task, and separately placing the instructions in a plurality of instruction queues that are in a one-to-one correspondence with a plurality of execution units; determining, based on a relationship identifier corresponding to a restriction instruction at a head of a first instruction queue, a processing status of a second instruction queue on which the first instruction queue depends in a data dependency relationship indicated by the relationship identifier, where the first instruction queue is any one of the plurality of instruction queues, and the second instruction queue is one of the plurality of instruction queues; when the processing status is processing completed, extracting the restriction instruction corresponding to the relationship identifier from the first instruction queue, to execute, by using an execution unit corresponding to the first instruction queue, an instruction after the restriction instruction; updating a processing status of the first instruction queue to processing completed based on the relationship identifier when processing of the first instruction queue is completed; and obtaining a processing result of the task when processing of all the plurality of instruction queues is completed.

The task may be, for example, an image recognition task, a data retrieval task, or a video coding task. Any instruction queue may have one or more data dependency relationships. For example, an instruction queue 2 has two data dependency relationships. A first data dependency relationship is a data dependency relationship between the instruction queue 2 and an instruction queue 1, and the data dependency relationship is indicated by a relationship identifier #1. A second data dependency relationship is a data dependency relationship between the instruction queue 2 and an instruction queue m, and the data dependency relationship is indicated by a relationship identifier #2.

In this embodiment of this application, a processing status of a task is updated based on different relationship identifiers that are in the task and that indicate different data dependency relationships of the task. In this way, another task that has data dependency on the task may be directly processed based on a corresponding relationship identifier, without using a large quantity of determining statements. In addition, a restriction instruction is set at a head of an instruction queue used to implement the task. In this way, when processing of a task on which the task depends is not completed, the restriction instruction is not extracted to stall execution of the task, so as to ensure an accurate execution occasion of the task, without setting a trigger instruction and a wait instruction that are paired. It can be learned that, in this solution, asynchronous execution of tasks can be implemented without setting a large quantity of determining instructions and corresponding trigger instructions and wait instructions, to reduce load of a compiler and improve task processing efficiency. In addition, there is no need to set a large quantity of determining statements and corresponding trigger instructions and wait instructions, so that it can be ensured that code used to implement the tasks is simpler.

According to the first aspect, at least one data dependency relationship of the first instruction queue includes: when execution of the first instruction queue depends on data output by the second instruction queue in the plurality of instruction queues, the data dependency relationship exists between the first instruction queue and the second instruction queue.

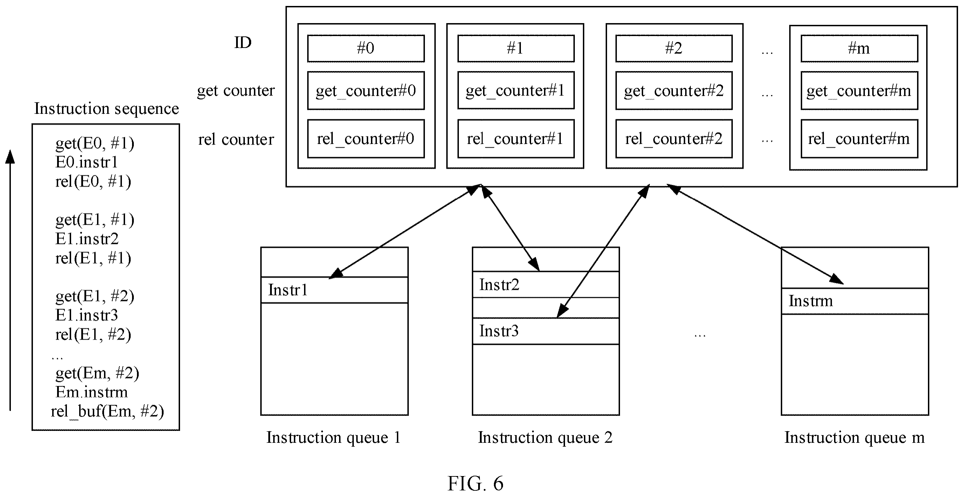

For example, FIG. 6 is an example diagram of a task relationship and a relationship identifier in a task processing method according to an embodiment of this application. As shown in FIG. 6, a relationship identifier #1 indicates a data dependency relationship between an instruction queue 1 represented by Instruction queue 1 and an instruction queue 2 represented by Instruction queue 2. The instruction queue 1 includes an instruction instr1, the instruction queue 2 includes an instruction instr2 and an instruction instr3, and execution of the instruction instr2 depends on an execution result of the instruction instr1, namely, data output by the instruction queue 1.

According to any one of the first aspect or the foregoing implementations of the first aspect, reading all the instructions in the instruction sequence used to implement the task, and separately placing the instructions in the plurality of instruction queues that are in a one-to-one correspondence with the plurality of execution units includes: reading, one by one, all the instructions in the instruction sequence used to implement the task, and placing the read instructions in a target instruction queue, where the target instruction queue is one of the plurality of instruction queues; and allocating, when the restriction instruction is read, first information to the restriction instruction based on the relationship identifier corresponding to the restriction instruction, where the first information indicates an execution order of the restriction instruction in the data dependency relationship indicated by the corresponding relationship identifier; updating the processing status of the first instruction queue to processing completed based on the relationship identifier when processing of the first instruction queue is completed includes: allocating, when processing of the first instruction queue is completed, second information corresponding to the relationship identifier to the first instruction queue, where the second information indicates that processing of the first instruction queue is completed, and second sequence information and first information that correspond to a same relationship identifier are allocated in a same manner; and determining, based on the relationship identifier corresponding to the restriction instruction at the head of the first instruction queue, the processing status of the second instruction queue on which the first instruction queue depends in the data dependency relationship indicated by the relationship identifier includes: reading, based on the relationship identifier corresponding to the restriction instruction at the head of the first instruction queue, the first information and the second information that correspond to the relationship identifier; and when the read first information is the same as the read second information, determining that the processing status of the second instruction queue on which the first instruction queue depends in the data dependency relationship indicated by the relationship identifier is processing completed; or when the read first information is different from the read second information, determining that the processing status of the second instruction queue on which the first instruction queue depends in the data dependency relationship indicated by the relationship identifier is processing uncompleted.

In this embodiment of this application, the first information and the second information that correspond to the relationship identifier respectively indicate the execution order of the restricted instruction in the corresponding data dependency relationship and that processing of the first instruction queue in the data dependency relationship is completed. In addition, an allocation manner of the second information is the same as an allocation manner of the first information. In this way, when execution of the second instruction queue is completed, the second information corresponding to the relationship identifier is updated to be the same as the first information of the first instruction queue corresponding to the second instruction queue, to ensure that the processing status of the second instruction queue can be determined by directly comparing whether the first information is the same as the second information. There is no need to establish a correspondence to record a processing progress and a data dependency relationship of an instruction queue, to further improve task processing efficiency.

According to any one of the first aspect or the foregoing implementations of the first aspect, allocating, when the restriction instruction is read, the first information to the restriction instruction based on the relationship identifier corresponding to the restriction instruction includes: determining, when the restriction instruction is read, the first information for the relationship identifier corresponding to the restriction instruction, and allocating the first information to the restriction instruction; and updating, when first information is allocated to one relationship identifier each time, the first information corresponding to the one relationship identifier, for next allocation of first information to the one relationship identifier; and allocating, when processing of the first instruction queue is completed, the second information corresponding to the relationship identifier to the first instruction queue includes: determining, when processing of the first instruction queue is completed, the second information for the relationship identifier corresponding to the first instruction queue, and allocating the second information to the first instruction queue; and updating, when second information is allocated to one relationship identifier each time, the second information corresponding to the one relationship identifier, for next allocation of second information to the one relationship identifier.

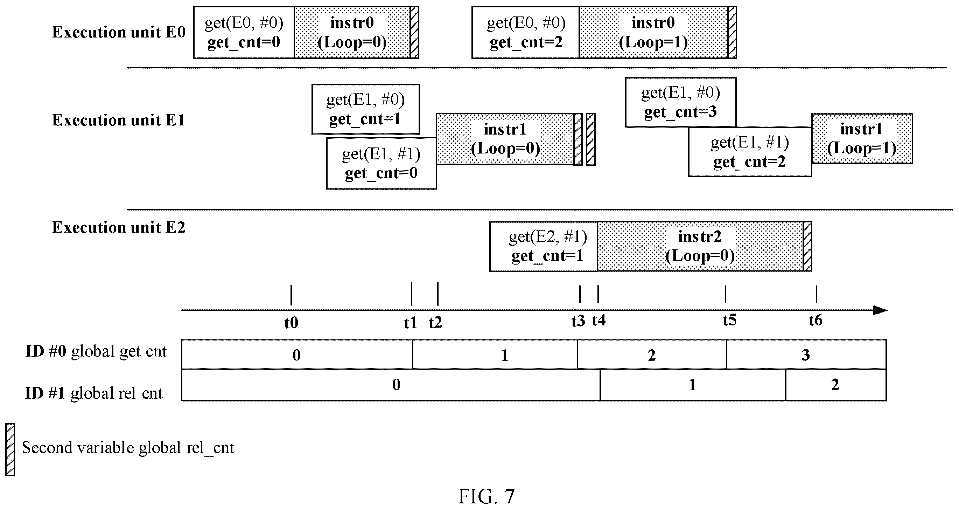

For example, FIG. 7 is an example timing diagram of a task processing method according to an embodiment of this application. As shown in FIG. 7, at a moment t1, a read restriction variable get cnt=1 of a restriction instruction get(E1, #0) in an instruction queue 1 corresponding to an execution unit E1 is the same as a value of second information global rel cnt corresponding to a relationship identifier #0. It may be determined that, a processing status of a second instruction queue corresponding to the instruction queue 1, namely, an instruction queue 0, is processing completed.

In this embodiment of this application, the first information and the second information are allocated in a same manner, so that it can be ensured that a processing status of a second subtask can be determined by directly comparing the first information and the second information, and there is no need to establish a complex correspondence table, to further improve task processing efficiency.

According to any one of the first aspect or the foregoing implementations of the first aspect, after the restriction instruction corresponding to the relationship identifier is extracted from the first instruction queue, the task processing method further includes: when an update instruction corresponding to the relationship identifier is extracted from the first instruction queue, determining that processing of the first instruction queue is completed, where the update instruction corresponding to the relationship identifier is set at a tail of the first instruction queue.

For example, as shown in FIG. 6, a relationship identifier #1 of an instruction queue 1 corresponds to an update instruction rel(E0, #1). The update instruction rel(E0, #1) is located at a tail of the instruction queue 1, that is, is located after the instruction instr1, and is adjacent to the instruction instr1. In this way, that the update instruction is extracted means that an instruction that is in a corresponding instruction queue and that is used to implement the instruction queue has been executed. In this case, processing of the instruction queue is completed, in other words, a processing status of the instruction queue is processing completed.

In this embodiment of this application, the update instruction is set at the tail of the instruction queue used to implement the instruction queue, so that when the update instruction is extracted, it can be determined that processing of the instruction queue in which the update instruction is located is completed, to further improve task processing efficiency.

According to any one of the first aspect or the foregoing implementations of the first aspect, determining the first information for the relationship identifier corresponding to the restriction instruction includes: reading a first counting result of a first counting unit for the relationship identifier corresponding to the restriction instruction, to obtain the first information; updating, when the first information is allocated to the one relationship identifier each time, the first information corresponding to the one relationship identifier, for next allocation of first information to the one relationship identifier includes: controlling, when the first information is allocated to the one relationship identifier each time, the first counting unit to perform counting based on the allocated first counting result, to obtain updated first information corresponding to the one relationship identifier, for next allocation of first information to the one relationship identifier; determining, when processing of the first instruction queue is completed, the second information for the relationship identifier corresponding to the first instruction queue, and allocating the second information to the first instruction queue includes: reading a second counting result of a second counting unit for the relationship identifier corresponding to the first instruction queue, to obtain the second information; and updating, when the second information is allocated to the one relationship identifier each time, the second information corresponding to the one relationship identifier, for next allocation of second information to the one relationship identifier includes: controlling, when the second information is allocated to the one relationship identifier each time, the second counting unit to perform counting based on the allocated second counting result, to obtain updated second information corresponding to the one relationship identifier, for next allocation of second information to the one relationship identifier.

For example, the first information is global get cnt, and updating the first information may be that a control unit controls a first counter to perform "global get cnt++". The second information is global rel cnt, and updating the second information may be that the control unit controls a second counter to perform "global rel cnt++".

In this embodiment of this application, a value of the first information and a value of the second information are respectively updated based on the counting results of the first counting unit and the second counting unit. This is more concise and accurate.

According to a second aspect, an embodiment of this application provides a chip. The chip includes a control unit, a plurality of execution units, and a plurality of queue placement units that are in a one-to-one connection to the plurality of execution units, and the plurality of queue placement units are separately connected to the control unit. The control unit is configured to: read all instructions in an instruction sequence used to implement a task, and separately place the instructions in a plurality of instruction queues, where the plurality of instruction queues are placed in the plurality of queue placement units one by one. The queue placement unit is configured to place an instruction queue corresponding to the connected execution unit. The control unit is further configured to: determine, based on a relationship identifier corresponding to a restriction instruction at a head of a first instruction queue, a processing status of a second instruction queue on which the first instruction queue depends in a data dependency relationship indicated by the relationship identifier, where the first instruction queue is any one of the plurality of instruction queues, and the second instruction queue is one of the plurality of instruction queues; and when the processing status is processing completed, extract the restriction instruction corresponding to the relationship identifier from the first instruction queue, to execute, by using an execution unit corresponding to the first instruction queue, an instruction after the restriction instruction. The execution unit is configured to process, under scheduling of the control unit, the instruction queue in the queue placement unit connected to the execution unit. The control unit is further configured to: update a processing status of the first instruction queue to processing completed based on the relationship identifier when processing of the first instruction queue is completed; and obtain a processing result of the task when processing of all the plurality of instruction queues is completed.

According to the second aspect, the control unit is specifically configured to: read, one by one, all the instructions in the instruction sequence used to implement the task, and place the read instructions in a target instruction queue, where the target instruction queue is one of the plurality of instruction queues; allocate, when the restriction instruction is read, first information to the restriction instruction based on the relationship identifier corresponding to the restriction instruction, where the first information indicates an execution order of the restriction instruction in the data dependency relationship indicated by the corresponding relationship identifier; allocate, when processing of the first instruction queue is completed, second information corresponding to the relationship identifier to the first instruction queue, where the second information indicates that processing of the first instruction queue is completed, and second sequence information and first information that correspond to a same relationship identifier are allocated in a same manner; read, based on the relationship identifier corresponding to the restriction instruction at the head of the first instruction queue, the first information and the second information that correspond to the relationship identifier; and when the read first information is the same as the read second information, determine that the processing status of the second instruction queue on which the first instruction queue depends in the data dependency relationship indicated by the relationship identifier is processing completed; or when the read first information is different from the read second information, determine that the processing status of the second instruction queue on which the first instruction queue depends in the data dependency relationship indicated by the relationship identifier is processing uncompleted.

According to any one of the second aspect or the foregoing implementations of the second aspect, the control unit is specifically configured to: determine, when the restriction instruction is read, the first information for the relationship identifier corresponding to the restriction instruction, and allocate the first information to the restriction instruction; and update, when first information is allocated to one relationship identifier each time, the first information corresponding to the one relationship identifier, for next allocation of first information to the one relationship identifier; and allocating, when processing of the first instruction queue is completed, the second information corresponding to the relationship identifier to the first instruction queue includes: determining, when processing of the first instruction queue is completed, the second information for the relationship identifier corresponding to the first instruction queue, and allocating the second information to the first instruction queue; and updating, when second information is allocated to one relationship identifier each time, the second information corresponding to the one relationship identifier, for next allocation of second information to the one relationship identifier.

According to any one of the second aspect or the foregoing implementations of the second aspect, the control unit is further configured to: after the restriction instruction corresponding to the relationship identifier is extracted from the first instruction queue, when an update instruction corresponding to the relationship identifier is extracted from the first instruction queue, determine that processing of the first instruction queue is completed, where the update instruction corresponding to the relationship identifier is set at a tail of the first instruction queue.

According to any one of the second aspect or the foregoing implementations of the second aspect, the chip further includes a first counting unit and a second counting unit that are separately connected to the control unit. The first counting unit is configured to perform, under control of the control unit, counting in a preset counting manner to obtain a first counting result. The second counting unit is configured to perform, under control of the control unit, counting in the preset counting manner to obtain a second counting result. The control unit is specifically configured to: read the first counting result of the first counting unit for the relationship identifier corresponding to the restriction instruction, to obtain the first information; when the first information is allocated to the one relationship identifier each time, control the first counting unit to perform counting based on the allocated first counting result, to obtain updated first information corresponding to the one relationship identifier, for next allocation of first information to the one relationship identifier; read the second counting result of the second counting unit for the relationship identifier corresponding to the first instruction queue, to obtain the second information; and control, when the second information is allocated to the one relationship identifier each time, the second counting unit to perform counting based on the allocated second counting result, to obtain updated second information corresponding to the one relationship identifier, for next allocation of second information to the one relationship identifier.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides a task processing system. The system includes a control unit, a plurality of execution units, and a plurality of queue placement units that are in a one-to-one connection to the plurality of execution units, the plurality of queue placement units are separately connected to the control unit, the control unit and the plurality of queue placement units are included in a first chip, and the plurality of execution units are separately included in at least one second chip. The control unit is configured to: read all instructions in an instruction sequence used to implement a task, and separately place the instructions in a plurality of instruction queues, where the plurality of instruction queues are placed in the plurality of queue placement units one by one. The queue placement unit is configured to place an instruction queue corresponding to the connected execution unit. The control unit is further configured to: determine, based on a relationship identifier corresponding to a restriction instruction at a head of a first instruction queue, a processing status of a second instruction queue on which the first instruction queue depends in a data dependency relationship indicated by the relationship identifier, where the first instruction queue is any one of the plurality of instruction queues, and the second instruction queue is one of the plurality of instruction queues; and when the processing status is processing completed, extract the restriction instruction corresponding to the relationship identifier from the first instruction queue, to execute, by using an execution unit corresponding to the first instruction queue, an instruction after the restriction instruction. The execution unit is configured to process, under scheduling of the control unit, the instruction queue in the queue placement unit connected to the execution unit. The control unit is further configured to: update a processing status of the first instruction queue to processing completed based on the relationship identifier when processing of the first instruction queue is completed; and obtain a processing result of the task when processing of all the plurality of instruction queues is completed.

According to the third aspect, the control unit is specifically configured to: read, one by one, all the instructions in the instruction sequence used to implement the task, and place the read instructions in a target instruction queue, where the target instruction queue is one of the plurality of instruction queues; allocate, when the restriction instruction is read, first information to the restriction instruction based on the relationship identifier corresponding to the restriction instruction, where the first information indicates an execution order of the restriction instruction in the data dependency relationship indicated by the corresponding relationship identifier; allocate, when processing of the first instruction queue is completed, second information corresponding to the relationship identifier to the first instruction queue, where the second information indicates that processing of the first instruction queue is completed, and second sequence information and first information that correspond to a same relationship identifier are allocated in a same manner; read, based on the relationship identifier corresponding to the restriction instruction at the head of the first instruction queue, the first information and the second information that correspond to the relationship identifier; and when the read first information is the same as the read second information, determine that the processing status of the second instruction queue on which the first instruction queue depends in the data dependency relationship indicated by the relationship identifier is processing completed; or when the read first information is different from the read second information, determine that the processing status of the second instruction queue on which the first instruction queue depends in the data dependency relationship indicated by the relationship identifier is processing uncompleted.

According to any one of the third aspect or the foregoing implementations of the third aspect, the control unit is specifically configured to: determine, when the restriction instruction is read, the first information for the relationship identifier corresponding to the restriction instruction, and allocate the first information to the restriction instruction; and update, when first information is allocated to one relationship identifier each time, the first information corresponding to the one relationship identifier, for next allocation of first information to the one relationship identifier; and allocating, when processing of the first instruction queue is completed, the second information corresponding to the relationship identifier to the first instruction queue includes: determining, when processing of the first instruction queue is completed, the second information for the relationship identifier corresponding to the first instruction queue, and allocating the second information to the first instruction queue; and updating, when second information is allocated to one relationship identifier each time, the second information corresponding to the one relationship identifier, for next allocation of second information to the one relationship identifier.

According to any one of the third aspect or the foregoing implementations of the third aspect, the control unit is further configured to: after the restriction instruction corresponding to the relationship identifier is extracted from the first instruction queue, when an update instruction corresponding to the relationship identifier is extracted from the first instruction queue, determine that processing of the first instruction queue is completed, where the update instruction corresponding to the relationship identifier is set at a tail of the first instruction queue.

According to any one of the third aspect or the foregoing implementations of the third aspect, the chip further includes a first counting unit and a second counting unit that are separately connected to the control unit. The first counting unit is configured to perform, under control of the control unit, counting in a preset counting manner to obtain a first counting result. The second counting unit is configured to perform, under control of the control unit, counting in the preset counting manner to obtain a second counting result. The control unit is specifically configured to: read the first counting result of the first counting unit for the relationship identifier corresponding to the restriction instruction, to obtain the first information; when the first information is allocated to the one relationship identifier each time, control the first counting unit to perform counting based on the allocated first counting result, to obtain updated first information corresponding to the one relationship identifier, for next allocation of first information to the one relationship identifier; read the second counting result of the second counting unit for the relationship identifier corresponding to the first instruction queue, to obtain the second information; and control, when the second information is allocated to the one relationship identifier each time, the second counting unit to perform counting based on the allocated second counting result, to obtain updated second information corresponding to the one relationship identifier, for next allocation of second information to the one relationship identifier.

The third aspect and any one of the implementations of the third aspect respectively correspond to the first aspect and any one of the implementations of the first aspect. For technical effects corresponding to the third aspect and any one of the implementations of the third aspect, refer to technical effects corresponding to the first aspect and any one of the implementations of the first aspect. Details are not described herein again.

According to a fourth aspect, an embodiment of this application provides an electronic device, including a processor and a transceiver. A memory is configured to store one or more programs. When the one or more programs are executed by one or more processors, the one or more processors are enabled to implement the method in any one of the first aspect and the implementations of the first aspect.

According to a fifth aspect, an embodiment of this application provides a computer-readable medium, configured to store a computer program. The computer program includes instructions used to perform the method in any one of the first aspect or the possible implementations of the first aspect.

According to a sixth aspect, an embodiment of this application provides a computer program. The computer program includes instructions used to perform the method in any one of the first aspect or the possible implementations of the first aspect.

### BRIEF DESCRIPTION OF DRAWINGS

To describe the technical solutions in embodiments of this application more clearly, the following briefly describes the accompanying drawings used in embodiments of this application. It is clear that the accompanying drawings in the following description show merely some embodiments of this application, and a person of ordinary skill in the art may still derive other drawings from these accompanying drawings without creative efforts.
FIG. 1 is an example diagram of a task processing process;
FIG. 2 is a block diagram of a structure of a chip 200 according to an embodiment of this application;
FIG. 3 is a block diagram of a structure of an electronic device 300 according to an embodiment of this application;
FIG. 4 is a block diagram of a structure of a task processing system 400 according to an embodiment of this application;
FIG. 5 is a schematic flowchart of a task processing method according to an embodiment of this application;
FIG. 6 is an example diagram of a task relationship and a relationship identifier in a task processing method according to an embodiment of this application; and
FIG. 7 is an example timing diagram of a task processing method according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are a part but not all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, terms "first", "second", and the like are intended to distinguish between different objects but do not indicate a particular order of the objects. For example, a first target object and a second target object are used to distinguish between different target objects, but are not used to describe a particular order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more than two processing units, and a plurality of systems are two or more than two systems.

A task processing apparatus may split one task into a plurality of subtasks, and the plurality of subtasks are separately executed by at least two of a plurality of execution units, to improve task processing efficiency. The task may be, for example, an image recognition task, a data retrieval task, or a video coding task. The task processing apparatus may include one chip, a plurality of chips that are communicatively connected, one electronic device, or a plurality of electronic devices that are communicatively connected. A case in which one electronic device includes a plurality of execution units may be, for example, that a chip in the electronic device is an acceleration chip like a GPU; or the electronic device includes a plurality of chips, and at least two of the plurality of execution units are distributed in different chips of the plurality of chips. For a plurality of electronic devices that are communicatively connected, at least two of a plurality of execution units may be, for example, included in different electronic devices in the plurality of electronic devices that are communicatively connected.

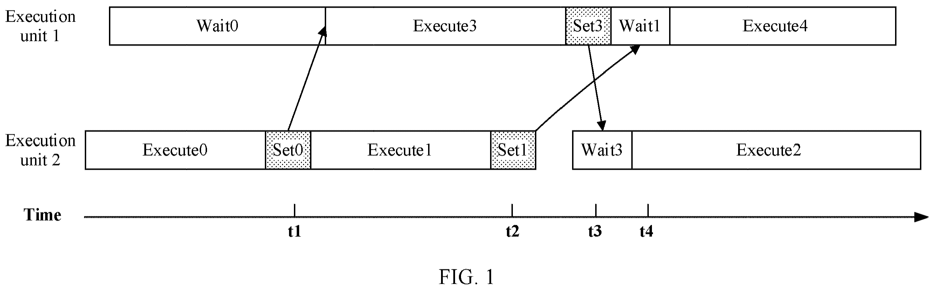

For example, FIG. 1 is an example diagram of a task processing process. As shown in FIG. 1, a task is split into a plurality of subtasks, and an execution unit 1 and an execution unit 2 respectively execute a part of the plurality of subtasks. Specifically, the execution unit 2 executes a subtask Execute0, a subtask Execute1, and a subtask Execute2; and the execution unit 1 executes a subtask Execute3 and a subtask Execute4. The subtask Execute3 has data dependency on the subtask Execute0, the subtask Execute4 has data dependency on the subtask Execute1, and the subtask Execute2 has data dependency on the subtask Execute3. The execution unit 1 and the execution unit 2 perform asynchronous processing on the subtasks, to ensure that data on which the subtasks depend can be normally accessed, in other words, ensure that the subtasks are executed at a correct occasion. The asynchronous processing may include the following steps:

At a moment t1, after completing execution of the subtask Execute0, the execution unit 2 sends an event trigger instruction Set0 to the execution unit 1, and the execution unit 1 executes a wait instruction Wait0 to stall (stall) an instruction used to execute the subtask Execute3. After receiving the instruction Set0, the execution unit 2 may start to execute the subtask Execute3.

At a moment t2, after executing the subtask Execute1, the execution unit 2 triggers a Set1 event, that is, sends an event trigger instruction Set1 to the execution unit 1.

At a moment t3, after completing execution of the subtask Execute3, the execution unit 1 sends an event trigger instruction Set3 to the execution unit 2. The execution unit 2 executes a wait instruction Wait3, and continues to execute the subtask Execute2 when receiving the instruction Set3.

At a moment t4, the execution unit 1 executes a wait instruction Wait1, and may continue to execute the subtask Execute4 when receiving the instruction Set1.

In the example in FIG. 1, a depended execution unit, namely, a source end, sets an event trigger instruction (for example, set) indicating that task execution is completed, and an execution unit depending on the source end, namely, a peer end, sets a wait instruction (for example, wait) to stall execution of an instruction for a to-be-executed task at the source end. The instruction at the peer end can be executed only after the event trigger instruction sent by the source end is received. In this way, the source end completes execution of the event trigger instruction of the task, and the peer end configured for the source end stalls execution of the wait instruction for the instruction, to ensure that execution units having data dependency execute respective tasks at a correct occasion.

However, in a scenario in which task execution logic is complex, there may be a plurality of cases about whether a source-end task is executed and whether a peer-end task is executed. In this case, to ensure that an instruction set and an instruction wait are paired, many determining instructions are required to determine an execution status of a task by each execution unit in different cases. This easily causes load to a compiler.

For example, the following task execution scenarios exist: When a condition indicated by a conditional statement cond1 is true, an execution unit E0 executes a task instruction E0.instr0 to execute a task assigned to the execution unit E0. When a condition indicated by a conditional statement cond2 is true and execution of the instruction E0.instr0 is completed, an execution unit E1 that has data dependency on the execution unit E0 executes a task instruction El.instr0 to execute a task assigned to the execution unit E1. Code for implementing the task is shown in Table 1:

| Table 1 Code example 1 of a task |
|---|
| if cond1; |
| E0.instr0; //Task instruction of a task executed by the execution unit E0 |
| set(E0->E1); |
| flag=true ---1); //Set a flag, indicating that a set instruction has been sent |
| if cond2; |
| if flag --2); // Check the flag, where if the flag is true, it indicates that the set instruction has been sent and a wait instruction needs to be inserted for pairing; or if the flag is false, a wait instruction does not need to be set |
| wait(E0->E1); |
| E1.instr0; //Task instruction of a task executed by the execution unit E1 |
| if !cond2 && flag --3); // When the flag is true and cond2 is false, it indicates that there is set but no wait, and the wait instruction needs to be inserted for pairing |
| wait(E0->E1) |

It can be learned that, in the complex scenario shown in Table 1, a plurality of conditional instructions such as an instruction indicating that the flag is true and an instruction indicating that the flag is true and cond2 is false are added, to ensure that an event trigger instruction set and a wait instruction wait are paired. This method results in a large amount of determining during task processing, potentially overburdening a compiler and leading to reduced task processing efficiency.

To resolve the foregoing problem, embodiments of this application provide a task processing method. The task processing method is applied to an electronic device including a plurality of execution units, where data dependency exists between tasks processed by at least two of the plurality of execution units. In the method, a processing status of a task is updated based on different relationship identifiers that are in the task and that indicate different data dependency relationships of the task. In this way, another task that has data dependency on the task may be directly processed based on a corresponding relationship identifier, without using a large quantity of determining statements. In addition, a restriction instruction is set at a head of an instruction queue used to implement the task. In this way, when processing of a task on which the task depends is not completed, the restriction instruction is not extracted to stall execution of the task, so as to ensure an accurate execution occasion of the task, without setting a trigger instruction and a wait instruction that are paired. It can be learned that, in this solution, asynchronous execution of tasks can be implemented without setting a large quantity of determining instructions and corresponding trigger instructions and wait instructions, to reduce load of a compiler and improve task processing efficiency. In addition, there is no need to set a large quantity of determining statements and corresponding trigger instructions and wait instructions, so that it can be ensured that code used to implement the tasks is simpler.

Before the technical solutions in embodiments of this application are described, an electronic device in embodiments of this application is first described with reference to the accompanying drawings. Embodiments of this application may be used in an electronic device like a computer, a mobile terminal, a wearable device, an internet television, or a server. A chip of the electronic device includes a plurality of execution units, and data dependency exists between at least two of the plurality of execution units. In other words, there are a plurality of asynchronous execution units in a same chip of the electronic device.

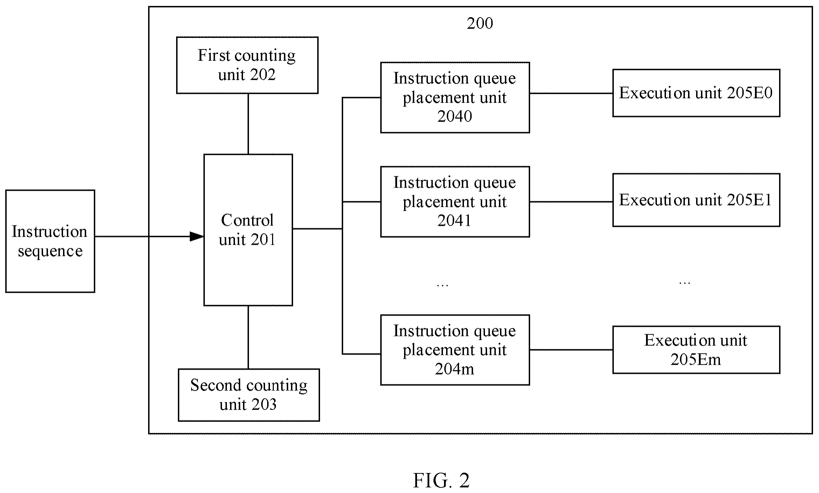

For example, FIG. 2 is a block diagram of a structure of a chip 200 according to an embodiment of this application. As shown in FIG. 2, the chip 200 may include a control unit 201, a first counting unit 202, a second counting unit 203, a plurality of instruction queue placement units (for example, an instruction queue placement unit 2040, an instruction queue placement unit 2041, ..., and an instruction queue placement unit 204m, where m is a quantity of instruction queue placement units), and a plurality of execution units (for example, an execution unit 205E0, an execution unit 205E1, ..., and an execution unit 205Em), where the plurality of instruction queue placement units are in a one-to-one correspondence with the plurality of execution units.

The control unit 201 is configured to receive an instruction sequence, where the instruction sequence is code of a same task, for example, code of an image recognition task. When sequentially receiving all instructions in the instruction sequence, the control unit 201 may dispatch the received instructions to a plurality of instruction queues based on types of the instructions, to wait for execution units corresponding to different instruction queues to execute instructions in corresponding instruction queues. In other words, the instructions in the instruction sequence are dispatched to the plurality of instruction queues, that is, the same task is split into the plurality of instruction queues, and one instruction queue is one instruction queue.

The instruction queue placement unit 2040 to the instruction queue placement unit 204m are respectively configured to place an instruction queue corresponding to a corresponding execution unit. For example, the instruction queue placement unit 2040 is configured to place an instruction queue 0 corresponding to the execution unit 205E0. In specific application, the instruction queue placement unit may be, for example, hardware having a storage function, like a memory. This is not limited in embodiments of this application.

The execution unit 205E0 to the execution unit 205Em are respectively configured to execute instructions in corresponding instruction queues.

The first counting unit 202 and the second counting unit 203 are respectively configured to record first information and second information, where the first information indicates a task processing status indicating whether an associated execution unit having data dependency with an execution unit has completed execution of a task, and the second information indicates a task processing status indicating whether the execution unit has completed execution of a task.

The control unit 201 is further configured to: separately obtain the first information or the second information by using a restriction instruction and an update instruction in each instruction queue, and when it is determined, based on the first information or the second information, that the instruction queue satisfies an execution condition, send an instruction in the instruction queue to a corresponding execution unit for processing.

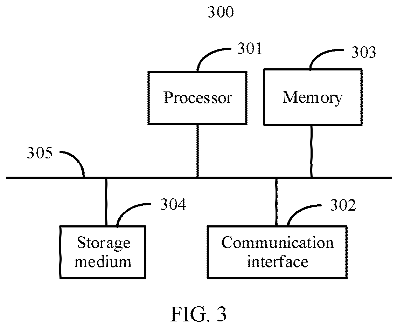

For example, the chip 200 shown in FIG. 2 may be included in an electronic device. FIG. 3 is a block diagram of a structure of an electronic device 300 according to an embodiment of this application. As shown in FIG. 3, the electronic device 300 may include a processor 301, a communication line 305, a memory 303, a storage medium 304, and a part or all of components in at least one communication interface 302.

The processor 301 is configured to perform a task processing method provided in subsequent embodiments of this application. The processor 301 may include the chip 200 shown in FIG. 2.

The communication line 305 is configured to connect components in the electronic device 300. Specifically, the communication line 305 may include a data bus, a power bus, a control bus, a status signal bus, and the like. However, for clear description, various types of buses in the figure are marked as the communication line 305.

The memory 303 may be a volatile memory or a nonvolatile memory, or may include both a volatile memory and a nonvolatile memory. The memory 303 may exist independently, and is connected to the processor 301 through the communication line 305. The memory 303 may alternatively be integrated with the processor 301. The memory 303 stores computer instructions. The processor 301 may execute the computer instructions stored in the memory 303, to implement the task processing method provided in the subsequent embodiments of this application. Optionally, the computer instructions in embodiments may alternatively be referred to as application program code. This is not specifically limited in embodiments.

The storage medium 304 is configured to store computer instructions and various data for implementing the technical solutions in embodiments of this application, so that when performing the task processing method provided in the subsequent embodiments of this application, the electronic device 300 loads the computer instructions and the various data that are stored in the storage medium 304 to the memory 303. In this way, the processor 301 may execute the computer instructions stored in the memory 303, to implement the task processing method provided in embodiments of this application.

The communication interface 302 is any electronic device like a transceiver, and is configured to communicate with another device or a communication network, for example, the Ethernet, a radio access network (radio access network, RAN), or a wireless local area network (wireless local area network, WLAN).

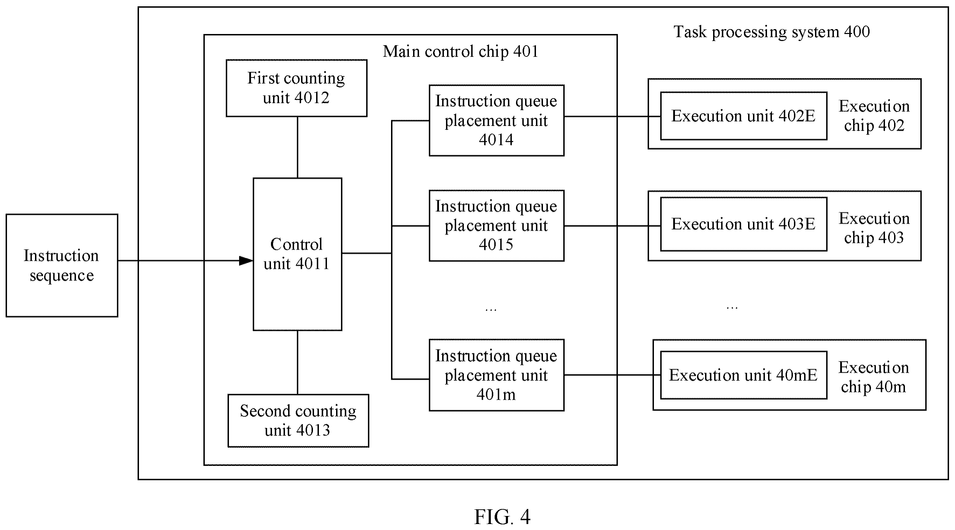

In an optional implementation, embodiments of this application may be used in a task processing system. FIG. 4 is a block diagram of a structure of a task processing system 400 according to an embodiment of this application. As shown in FIG. 4, the task processing system 400 includes:
a main control chip 401 and a plurality of execution chips, for example, an execution chip 402, an execution chip 403, ..., and an execution chip 40m, where m is a total quantity of a plurality of instruction queues, and the plurality of instruction queues are queues of instructions obtained by splitting a same task, namely, an instruction sequence; and each execution chip may include one execution unit, and the execution unit is configured to execute one instruction queue, that is, there are a plurality of execution units that have data dependency, for example, an execution unit 402E in an execution chip 402, an execution unit 403E in an execution chip 403, ..., and an execution unit 40mE in an execution chip 40m, where in an optional example, one execution chip may include at least one execution unit, and in another example, there may be one execution chip, and a plurality of execution units are all included in the execution chip.

The main control chip 401 includes a control unit 4011, a first counting unit 4012, a second counting unit 4013, and a plurality of instruction queue placement units configured to respectively place a plurality of instruction queues, for example, an instruction queue placement unit 4014, an instruction queue placement unit 4015, ..., and an instruction queue placement unit 401m.

In an example, the task processing system is included in an electronic device. In other words, the electronic device includes a plurality of chips, and the plurality of chips include one main control chip and at least one execution chip.

In another example, the task processing system shown in FIG. 4 may be a cluster including a plurality of electronic devices, for example, a computer cluster. The main control chip and the execution chip may be separately included in different electronic devices in the cluster; and different execution chips may be separately included in a same electronic device or different electronic devices in the cluster.

The units shown in FIG. 4 are similar to the units with the same name in FIG. 2, and a difference lies in different marks of the units. For example, the first counting unit 4012 is similar to the first counting unit 202, and a difference lies in different marks 4012 and 202 of the counting units. For a same part, details are not described herein again. For details, refer to the description of the embodiment in FIG. 2.

It should be understood that the chip 200 shown in FIG. 2, the electronic device 300 shown in FIG. 3, and the task processing system 400 shown in FIG. 4 are merely examples, and the chip 200, the electronic device 300, and the task processing system 400 may have more or fewer components than those shown in the figure, or may combine two or more components, or may have different component configurations. Various components shown in FIG. 2 to FIG. 4 may be implemented in hardware including one or more signal processing and/or application-specific integrated circuits, software, or a combination of hardware and software.

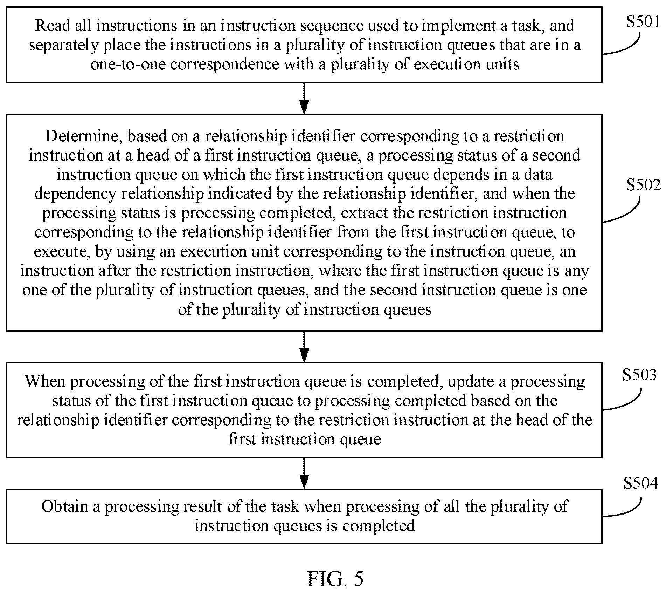

The following describes an example of the task processing method provided in embodiments of this application with reference to FIG. 5 to FIG. 7.

For example, FIG. 5 is a schematic flowchart of a task processing method according to an embodiment of this application. As shown in FIG. 5, the task processing method provided in embodiments of this application is applied to a control unit. The control unit may be included in the chip shown in FIG. 2, the electronic device shown in FIG. 3, or the task processing system shown in FIG. 4. The task processing method may include but is not limited to the following steps.

S501: Read, one by one, all instructions in an instruction sequence used to implement a task, and separately place the instructions in a plurality of instruction queues that are in a one-to-one correspondence with a plurality of execution units.

The instruction sequence used to implement the task may be, for example, obtained code used to implement the task (for example, an instruction sequence of an image recognition task may include code used to implement image recognition), and executing the instruction sequence is equivalent to processing the task. For example, the control unit may receive an instruction sequence that is of the task and that is entered by a user, or directly read a prestored instruction sequence of the task. This is not limited in embodiments of this application.

For example, an instruction sequence, namely, code used to implement a task, is shown in Table 2.

| Table 2 Code example 2 of a task |
|---|
| get(E0, #1); |
| E0.instr1; //Instruction instr1 included in an instruction queue 1 corresponding to an execution unit E0 |
| rel(E0, #1); |
| get(E1, #1); |
| El.instr2; //Instruction instr2 included in an instruction queue 2 corresponding to an execution unit E1 |
| rel(E1, #1); |
| get(E1, #2); |
| E1.instr3; //Instruction instr3 included in the instruction queue 2 corresponding to the execution unit E1 |
| rel(E1, #2); |
| ... |
| get(Em, #2); |
| Em.instrm; //Instruction instrm included in an instruction queue m corresponding to an execution unit Em |
| rel buf(Em, #2) |

After obtaining the instruction sequence, the control unit may read all instructions in the instruction sequence one by one, and separately place the instructions in the plurality of instruction queues that are in a one-to-one correspondence with the plurality of execution units. Instructions in a same instruction queue may be used to implement a same function, and an instruction queue in which different instructions are placed may be determined based on specific task logic. This is not limited in embodiments of this application. There is a data dependency relationship between at least two of the plurality of instruction queues. For example, in a data retrieval task, there is a data dependency relationship between a retrieval condition parsing instruction queue and a data matching instruction queue. S501 is equivalent to splitting the instruction sequence used to implement the task into the plurality of instruction queues that are in a one-to-one correspondence with the plurality of execution units, and the plurality of execution units may be used to respectively execute the plurality of instruction queues to perform task processing, so that task processing efficiency can be improved.

In an optional example, that the control unit reads, one by one, all the instructions in the instruction sequence used to implement the task, and separately places the instructions in the plurality of instruction queues that are in a one-to-one correspondence with the plurality of execution units may specifically include:

The control unit reads, one by one, all the instructions in the instruction sequence used to implement the task; places the read instructions in a target instruction queue based on attribute information of the read instructions (for example, types of the instructions), where the target instruction queue is one of the plurality of instruction queues that are in a one-to-one correspondence with the plurality of execution units; and allocate, when the restriction instruction is read, first information to the restriction instruction based on the relationship identifier included in the restriction instruction, where the restriction instruction is placed at a head of a corresponding instruction queue, the relationship identifier indicates a data dependency relationship of an instruction queue in which the restriction instruction corresponding to the relationship identifier is located, and the first information indicates an execution order of the restriction instruction corresponding to the first information in a corresponding data dependency relationship.

For example, FIG. 6 is an example diagram of a task relationship and a relationship identifier in a task processing method according to an embodiment of this application. As shown in FIG. 6, after reading, one by one, all the instructions in the instruction sequence shown in Table 2, the control unit may obtain the following instruction queues: the instruction queue 1 corresponding to the execution unit E0, where the instruction queue includes the instruction instr1; the instruction queue 2 corresponding to the execution unit E1, where the instruction queue includes the instruction instr2 and the instruction instr3; ...; and the instruction queue m corresponding to the execution unit Em, where the instruction queue includes the instruction instrm, and m indicates a quantity of instruction queues. The task relationship includes: that execution of the instruction instr2 depends on an execution result of the instruction instr1, in other words, there is a data dependency relationship between the instruction queue 1 and the instruction queue 2; and that execution of the instruction instrm depends on an execution result of the instruction instr3, in other words, there is a data dependency relationship between the instruction queue 2 and the instruction queue m.

Still refer to FIG. 6. The control unit reads the first instruction get(E0, #1) in the instruction sequence shown in Table 2. The instruction get(E0, #1) is a restriction instruction, and the restriction instruction get(E0, #1) is placed at a head of the instruction queue 1. In addition, first information first information get_cnt=0 is allocated to the restriction instruction based on the relationship identifier #1 included in the restriction instruction get(E0, #1). In other words, in a data dependency relationship indicated by the relationship identifier #1, the instruction queue 1 is executed first. By analogy, when the control unit reads a restriction instruction get(E1, #1) including the relationship identifier #1, the restriction instruction get(E1, #1) is placed at a head of the instruction queue 2. In addition, first information first information get_cnt=1 is allocated to the restriction instruction based on the relationship identifier #1 included in the restriction instruction get(E0, #1). In other words, in the data dependency relationship indicated by the relationship identifier #1, the instruction queue 2 is executed later, to be specific, the instruction queue 2 depends on data output by the instruction queue 1.

In an optional example, the control unit may allocate the first information to each restriction instruction by using the first counting unit 202 in FIG. 2 or the first counting unit 4012 in FIG. 4. As shown in FIG. 6, the relationship identifier ID may specifically include #0, #1, #2, ..., and #n. The first calculation unit may be, for example, a first counter get counter. The relationship identifier #0 corresponds to a first counting result get_counter#0, the relationship identifier #1 corresponds to a first counting result get _counter#1, the relationship identifier #2 corresponds to a first counting result get_counter#2, ..., and the relationship identifier #m corresponds to a first counting result get_counter#m. The control unit allocates the first information to the restriction instruction by using the first counter get counter, to further improve efficiency and accuracy. Specifically, that the control unit allocates the first information by using the first counter may include: The control unit reads a counting result of the first counter, to obtain a first counting result, and allocates the first counting result to a currently-read restriction instruction. Each time the first information is allocated, the control unit controls the first counter to count the first counting result corresponding to a corresponding relationship identifier, to update first information corresponding to the relationship identifier, and further allocate updated first information to a next restriction instruction corresponding to the relationship identifier, to implement allocation of the first information.

For example, a manner of controlling the first counter by the control unit may be sending a trigger signal, a counting notification, or the like to the first counter, where the first counter performs counting in response to the control, for example, increases a value of the first information by 1. For example, the first counting result corresponding to the relationship identifier is stored in a global variable global get cnt corresponding to the relationship identifier, and the control unit may control, by executing an instruction "global get cnt++", the first counter to perform counting corresponding to the relationship identifier. On this basis, the control unit reads a value of the global variable global get cnt and assigns the value to a restriction variable get_cnt of the restriction instruction. In other words, the first information=the value of get _cnt=the value of global get cnt. In addition, an initial value of a first counting result corresponding to each relationship identifier, namely, a value of a first piece of first information allocated to each relationship identifier, may be 0. For example, when reading the restriction instruction get(E0, #1) from the instruction sequence, the control unit reads, from the first counter, the first counting result global get cnt corresponding to the relationship identifier #1, that is, 0, and assigns the value to a restriction variable get_cnt of the restriction instruction get(E0, #1), that is, allocates first information 0 to the restriction instruction get(E0, #1). In this case, the control unit controls the first counter to perform counting and perform global get cnt++ on the first counting result corresponding to the relationship identifier #1, to obtain an updated first counting result global get cnt that is 1. On this basis, when reading the restriction instruction get(E1, #1), the control unit reads the first counting result global get cnt=1, and assigns the value to a restriction variable get_cnt of the restriction instruction get(E1, #1), that is, allocates first information 1 to the restriction instruction get(E1, #1). By analogy, the control unit allocates the first information 0 corresponding to the relationship identifier #2 to a restriction instruction get(E1, #2), and allocates the first information 1 corresponding to the relationship identifier #2 to a restriction instruction get(Em, #2). The first information is assigned to the restriction variable, so that it can be ensured that the restriction instruction directly corresponds to the first information. In subsequent S502, when a processing status of a second instruction queue corresponding to each relationship identifier is determined, a corresponding restriction variable is directly read. This is more efficient.

A data dependency relationship of each instruction queue may include that execution of the instruction queue depends on data output by another instruction queue. That the execution of the instruction queue depends on the data output by the another instruction queue may include: The instruction queue can execute, that is, read, a dependency relationship only after reading the data output by the another instruction queue; or the instruction queue can execute, that is, write, a dependency relationship only after the data output by the another instruction queue is written. For example, refer to Table 2. The instruction queue 2 has data dependency on the instruction queue 1. In this case, a data dependency relationship of the instruction queue 2 may include the data dependency relationship between the instruction queue 2 and the instruction queue 1, and the data dependency relationship is indicated by the relationship identifier #1. Correspondingly, a data dependency relationship of the instruction queue 1 may include the data dependency relationship between the instruction queue 2 and the instruction queue 1, and the data dependency relationship is indicated by the relationship identifier #1.

Each instruction queue has one or more data dependency relationships. For example, in Table 2, the instruction queue 2 has two data dependency relationships. A first data dependency relationship is the data dependency relationship between the instruction queue 2 and the instruction queue 1, and the data dependency relationship is indicated by the relationship identifier #1. A second data dependency relationship is a data dependency relationship between the instruction queue 2 and the instruction queue m, and the data dependency relationship is indicated by the relationship identifier #2. In other words, two instruction queues in a same data dependency relationship may indicate the data dependency relationship by using a same relationship identifier. This is more concise and accurate.

It may be understood that instructions included in each of the foregoing instruction queues are merely examples. In specific application, a specific instruction in an instruction queue may be set based on an application requirement.

S502: Determine, based on a relationship identifier corresponding to a restriction instruction at a head of a first instruction queue, a processing status of a second instruction queue on which the first instruction queue depends in a data dependency relationship indicated by the relationship identifier, and when the processing status is processing completed, extract the restriction instruction corresponding to the relationship identifier from the first instruction queue, to execute, by using an execution unit corresponding to the instruction queue, an instruction after the restriction instruction, where the first instruction queue is any one of the plurality of instruction queues, and the second instruction queue is one of the plurality of instruction queues

After reading all the instructions in the instruction sequence used to implement the task, and separately placing the instructions in the plurality of instruction queues that are in a one-to-one correspondence with the plurality of execution units, the control unit may separately process the plurality of instruction queues to implement task processing. In this way, any one of the plurality of instruction queues is the first instruction queue, and each of the plurality of instruction queues is processed in the manner in S502. The second instruction queue is an instruction queue that is in the plurality of instruction queues and that has a data dependency relationship with the first instruction queue, and the data dependency relationship is a data dependency relationship indicated by the relationship identifier corresponding to the first instruction queue.

The instruction queue shown in FIG. 6 is used as an example. The first instruction queue is the instruction queue 1. In this case, the second instruction queue is empty, in other words, execution of the instruction queue 1 does not depend on another instruction queue. This is equivalent to that a processing status of the second instruction queue corresponding to the instruction queue 1 is always processing completed. If the first instruction queue is the instruction queue 2, the second instruction queue is the instruction queue 1. If the instruction queue m is the first instruction queue, the second instruction queue is the instruction queue 2.

For ease of understanding and proper layout, the following specifically describes, with reference to S503, a specific manner of determining, by the control unit based on the relationship identifier corresponding to the restriction instruction at the head of the first instruction queue, the processing status of the second instruction queue on which the first instruction queue depends in the data dependency relationship indicated by the relationship identifier.

S503: When processing of the first instruction queue is completed, update a processing status of the first instruction queue to processing completed based on the relationship identifier corresponding to the restriction instruction at the head of the first instruction queue.

The control unit extracts the restriction instruction corresponding to the relationship identifier from the first instruction queue, to execute, by using the execution unit corresponding to the first instruction queue, the instruction after the restriction instruction, which is equivalent to processing the first instruction queue. On this basis, the control unit may update the processing status of the first instruction queue to processing completed based on the relationship identifier when processing of the first instruction queue is completed. In this way, after processing of an instruction queue in a data dependency relationship indicated by each relationship identifier is completed, a processing status of the instruction queue is updated, to ensure that the control unit can accurately determine the processing status of the second instruction queue based on the relationship identifier when processing, according to S502, the first instruction queue in the data dependency relationship indicated by the relationship identifier, so as to ensure an accurate execution occasion of the first instruction queue.

In an optional implementation, that the control unit determines, based on the relationship identifier corresponding to the restriction instruction at the head of the first instruction queue, the processing status of the second instruction queue on which the first instruction queue depends in the data dependency relationship indicated by the relationship identifier may include: The control unit searches, based on the relationship identifier corresponding to the restriction instruction at the head of the first instruction queue, a correspondence between a relationship identifier and a processing status for the processing status of the second instruction queue on which the first instruction queue depends in the data dependency relationship indicated by the relationship identifier.

Correspondingly, when processing of the first instruction queue is completed, that the control unit updates the processing status of the first instruction queue to processing completed based on the relationship identifier corresponding to the restriction instruction at the head of the first instruction queue may include: When processing of the first instruction queue is completed, the control unit updates, based on the relationship identifier corresponding to the restriction instruction at the head of the first instruction queue, the processing status of the first instruction queue found in the correspondence between the relationship identifier and the processing status to processing completed.

For example, the control unit pre-establishes the correspondence between the relationship identifier and the processing state, to record and update a processing status of a first instruction queue in a data dependency relationship indicated by each relationship identifier. In this way, a processing status of a second instruction queue in the data dependency relationship indicated by the relationship identifier can be determined by searching the correspondence by using the relationship identifier. It may be understood that, in an initial status, that is, before task processing is performed, the processing status of the second instruction queue in the data dependency relationship indicated by each relationship identifier is processing uncompleted.

In another optional implementation, when the control unit allocates the first information to a restriction instruction in each instruction queue, and when processing of the first instruction queue is completed, that the control unit updates the processing status of the first instruction queue to processing completed based on the relationship identifier corresponding to the restriction instruction at the head of the first instruction queue may include: When processing of the first instruction queue is completed, the control unit allocates, to the first instruction queue, corresponding second information included in the restriction instruction at the head of the first instruction queue, where the second information indicates that processing of the corresponding instruction queue is completed.

In an example, second sequence information and first information that correspond to a same relationship identifier are allocated in a same manner. Correspondingly, that the control unit determines, based on the relationship identifier corresponding to the restriction instruction at the head of the first instruction queue, the processing status of the second instruction queue on which the first instruction queue depends in the data dependency relationship indicated by the relationship identifier may include:

The control unit reads, based on the relationship identifier corresponding to the restriction instruction at the head of the first instruction queue, the first information and the second information that correspond to the relationship identifier; and when the first information is the same as the second information, determines that the processing status of the second instruction queue on which the first instruction queue depends in the data dependency relationship indicated by the relationship identifier is processing completed; or when the first information is different from the second information, determines that the processing status of the second instruction queue on which the first instruction queue depends in the data dependency relationship indicated by the relationship identifier is processing uncompleted.

It may be understood that, when the control unit does not process the task, first information and second information that correspond to each relationship identifier are the same, for example, may be "0", "false", or "false". In other words, initial values of the first information and the second information that correspond to each relationship identifier are the same. In this way, it can be ensured that when a depended instruction queue in a data dependency relationship is processed according to S502, the instruction queue can be normally executed.

In an optional example, similar to allocation of the first information, the control unit may allocate the second information by using the second counting unit 203 in FIG. 2 or the second counting unit 4013 in FIG. 4. For example, as shown in FIG. 6, the second counting unit may be, for example, a second counter rel counter. The relationship identifier #0 corresponds to second information rel_counter#0, the relationship identifier #1 corresponds to second information rel_counter#1, the relationship identifier #2 corresponds to first information second information rel_counter#2, ..., and the relationship identifier #m corresponds to first information second information rel_counter#m. Specifically, that the control unit allocates the second information by using the second counter may include: The control unit reads a counting result of the second counter, to obtain a second counting result, and allocates the second counting result to a first instruction queue on which processing is completed currently. Each time when determining that processing of the first instruction queue is completed, the control unit controls the second counter to count the second counting result corresponding to a corresponding relationship identifier, to update second information corresponding to the relationship identifier, and further allocates updated second information to the first instruction queue on which processing is completed currently and that corresponds to the relationship identifier, to implement allocation of the second information. In addition, a manner of controlling the second counter by the control unit is the same as a manner of controlling the first counter. For details, refer to the description of the manner of controlling the first counter in S501. Details are not described herein again.

For example, the second counting result corresponding to the relationship identifier is stored in a global variable global rel cnt corresponding to the relationship identifier, and the control unit may control, by executing an instruction "global rel cnt++", the first counter to perform counting corresponding to the relationship identifier. On this basis, the control unit reads a value of the global variable global rel cnt to obtain the second information. In addition, an initial value of a second counting result corresponding to each relationship identifier, namely, a value of a first piece of second information allocated to each relationship identifier, may be 0.

FIG. 6 is used as an example. When the control unit starts to process the instruction queue 1, the control unit reads the second counting result global rel cnt corresponding to the relationship identifier #1, that is, 0 (namely, an initial value). In this case, the first information of the restriction instruction get(E0, #1) in the instruction queue 1 is 0. The first information and the second information are in a same order, and the control unit may extract the restriction instruction get(E0, #1). When processing of the instruction queue 1 is completed, the control unit controls the second counter to perform counting and perform global rel cnt++ on the second counting result corresponding to the relationship identifier #1, to obtain an updated second counting result global rel cnt that is 1. On this basis, when the control unit processes the restriction instruction get(E1, #1), the read first information of the restriction instruction get(E1, #1) is 1, which is the same as the second information corresponding to the relationship identifier #1. The control unit may extract the restriction instruction get(E1, #1). By analogy, when processing of the instruction queue 2 is completed, the second information corresponding to the relationship identifier #1 is 2, and the second information corresponding to the relationship identifier #2 is 1.

In addition, the instruction queue 2 and the instruction queue 1 in Table 2 are used as an example. The control unit executes, by using the execution unit E0, instructions after the restriction instruction get(E0, #1), namely, an instruction E0.instr1 and an instruction rel(E0, #1). In other words, the control unit extracts, from the instruction queue 1, an instruction after get(E0, #1), and sends the instruction to the execution unit E0 for execution. After the execution unit E0 completes execution, in other words, processing of the instruction queue 1 is completed, the control unit updates the second information global rel_cnt corresponding to the relationship identifier #1.

In an optional implementation, when the control unit executes, by using the execution unit corresponding to the first instruction queue, an instruction after the restriction instruction corresponding to the relationship identifier, if the control unit extracts an update instruction corresponding to the relationship identifier from a tail of the first instruction queue, the control unit determines that processing of the first instruction queue is completed.

Still refer to FIG. 6. For example, the relationship identifier #1 of the instruction queue 1 corresponds to the restriction instruction get(E0, #1) and the update instruction rel(E0, #1). The restriction instruction get(E0, #1) is located at the head of the instruction queue 1, that is, is located before the instruction instr1 and is adjacent to the instruction instr1. The update instruction rel(E0, #1) is located at a tail of the instruction queue 1, that is, is located after the instruction instr1 and is adjacent to the instruction instr1. Similarly, the relationship identifier #1 of the instruction queue 2 corresponds to the restriction instruction get(E1, #1) at the head of the instruction queue 2 and an update instruction rel(E1, #1) at a tail of the instruction queue 2. The relationship identifier #2 of the instruction queue 2 corresponds to the restriction instruction get(E1, #2) at the head of the instruction queue 2 and an update instruction rel(E1, #2) at the tail of the instruction queue 2. The relationship identifier #2 of the instruction queue m corresponds to the restriction instruction get(Em, #2) at a head of the instruction queue m and an update instruction rel(Em, #2) at a tail of the instruction queue m.

In this way, that the update instruction is extracted means that an instruction that is in a corresponding instruction queue and that is used to implement the task has been executed. In this case, a processing status of the instruction queue is processing completed. It can be learned that, in this embodiment of this application, the update instruction is set at the tail of the instruction queue, so that when the update instruction is extracted, it can be determined that processing of the instruction queue in which the update instruction is located is completed, to further improve task processing efficiency.

In an example, the restriction instruction and the update instruction may not be related to logic of the task. Extracting the restriction instruction or the update instruction from the instruction queue corresponding to the task is equivalent to performing "pop (Pop)" on the instruction. The restriction instruction or the update instruction does not need to be executed after being extracted. In other words, the restriction instruction is located at the head of the instruction queue, so that an execution occasion of the instruction used to implement the task can be controlled by using a queue first in first out mechanism, and dedicated logic for controlling subsequent instruction extraction does not need to be set. Similarly, the update instruction is located at the tail of the instruction queue, so that it can be ensured that when the update instruction is extracted, it indicates that processing of an instruction before the update instruction is completed, that is, processing of the task represented by the instruction queue in which the update instruction is located is completed, and dedicated logic for determining that processing of the task is completed does not need to be set. In this way, task processing is more efficient.

In this embodiment of this application, the update instruction is set at the tail of the instruction queue, so that it can be ensured that when the update instruction is extracted, it means that processing of an instruction before the update instruction is completed. In this way, it is automatically determined that a processing status of the instruction queue in this case is processing completed. This is more efficient.

In an optional implementation of the second information, the relationship identifier may be included in the update instruction. In this way, a correspondence between the relationship identifier and the update instruction does not need to be established, which is more convenient and efficient.

In an example, both the first information and the second information that correspond to the relationship identifier may be global variables, to ensure accurate synchronization of instruction execution statuses between different instruction queues in a same data dependency relationship.

For ease of understanding, the following provides an integrated description of the task processing method provided in embodiments of this application with reference to Table 3 and FIG. 7. For example, an instruction sequence, namely, code used to implement a task, is shown in Table 3.

| Table 3 Code example 3 of a task |
|---|
| For i=0:100; //This task is executed cyclically for 100 times |
| get(E0, #0); //#0, get_cnt=0, 2, 4... |
| instr0; |
| rel(E0, #0); |
| get(E1, #0); //#0, get_cnt=1, 3, 5... |
| get(E1, #1); //#1, get _cnt=0, 2, 4... |
| instrl; |
| rel(E1, #0); |
| rel(E1, #1); |
| get(E2, #1); //#1, get_cnt=1, 3, 5... |
| instr2; |
| rel(E2, #1) |

Data dependency relationships between instruction queues corresponding to different execution units in Table 3 are as follows:

A data dependency relationship exists between the instruction instr0 in the instruction queue 0 corresponding to the execution unit E0 and the instruction instr1 in the instruction queue 1 corresponding to the execution unit E1. The dependency relationship is indicated by using a same relationship identifier #0 in the restriction instruction get(E0, #0) and the update instruction rel(E0, #0). The task logic shown in Table 3 is set with an instruction for cyclically executing the task for 100 times. In this case, in a loop, the instruction instr1 in the instruction queue 1 has data read dependency on the instruction instr0 in the instruction queue 0, and the instruction instr1 in the instruction queue 1 can be executed only after execution of the instruction instr0 in the instruction queue 0 is completed. Data write dependency exists between the instruction instr1 in the instruction queue 1 in the current loop and the instruction instr0 in the instruction queue 0 in the next loop, and the instruction instr0 in the instruction queue 0 in the next loop can be executed only after execution of the instruction instr1 in the instruction queue 1 in the current loop is completed.

Similarly, in Table 3, a data dependency relationship exists between the instruction instr1 in the instruction queue 1 corresponding to the execution unit E1 and the instruction instr2 in the instruction queue 2 corresponding to the execution unit E2. The dependency relationship is indicated by using the relationship identifier #1 in the restriction instruction get(E1, #1) and the update instruction rel(E1, #1). In a loop, the instruction instr2 in the instruction queue 2 has data read dependency on the instruction instr1 in the instruction queue 1, and the instruction instr2 in the instruction queue 2 can be executed only after execution of the instruction instr1 in the instruction queue 1 is completed. Data write dependency exists between the instruction queue instr2 in the current loop and the instruction instr1 in the instruction queue 1 in the next loop, and the instruction instr1 in the instruction queue 1 in the next loop can be executed only after execution of the instruction instr2 in the instruction queue 2 in the current loop is completed.

It may be understood that the instruction "For i=0:100" for cyclically executing the task for 100 times in Table 3 is merely an example, and specific logic of the task in application may be set based on a specific requirement.

FIG. 7 is an example timing diagram of a task processing method according to an embodiment of this application. As shown in FIG. 7 and Table 3, the data dependency relationship indicated by the relationship identifier #0 exists between the instruction queue 1 corresponding to the execution unit E0 and the instruction queue 2 corresponding to the execution unit E1; and the data dependency relationship indicated by the relationship identifier #1 exists between the instruction queue 2 corresponding to the execution unit E1 and the instruction queue 3 corresponding to the execution unit E2. Initial values of the first information global get cnt and the second information global rel cnt are both 0. On this basis, the control unit processing the task shown in Table 3 may include the following process:

The control unit reads instructions in the instruction sequence shown in Table 3 one by one, and places the instructions in an instruction queue corresponding to each instruction. In each loop, the control unit allocates, by using the first counting unit, the first information to different restriction instructions corresponding to different relationship identifiers. Three loops are used as an example.

In a first loop, for the relationship identifier #0, the first information 0 is allocated to the restriction instruction get(E0, #0), and the first information 1 is allocated to the restriction instruction get(E1, #0). For the relationship identifier #1, the first information 0 is allocated to the restriction instruction get(E1, #1), and the first information 1 is allocated to the restriction instruction get(E2, #1).

In a second loop, for the relationship identifier #0, first information 2 is allocated to the restriction instruction get(E0, #0), and first information 3 is allocated to the restriction instruction get(E1, #0). For the relationship identifier #1, the first information 2 is allocated to the restriction instruction get(E1, #1), and the first information 3 is allocated to the restriction instruction get(E2, #1).

In a third loop, for the relationship identifier #0, first information 4 is allocated to the restriction instruction get(E0, #0), and first information 5 is allocated to the restriction instruction get(E1, #0). For the relationship identifier #1, the first information 4 is allocated to the restriction instruction get(E1, #1), and the first information 5 is allocated to the restriction instruction get(E2, #1).

In other words, the control unit can accurately allocate the first information to the restriction instruction by controlling, for each relationship identifier, the first counting unit to perform "global get cnt++", and accuracy of the first information can still be ensured when the task is cyclically executed.

At a moment t0, the control unit reads a restriction variable get_cnt=global get cnt=0 corresponding to the restriction instruction get(E0, #0) including the relationship identifier #0 and second information global rel cnt=0 corresponding to the relationship identifier #0 that are in the current first instruction queue, namely, the instruction queue 0 corresponding to the execution unit E0. The first information is the same as the second information. On this basis, the control unit may extract the restriction instruction get(E0, #0) in the instruction queue 0. After the restriction instruction get(E0, #0) is extracted, the instruction instr0 (loop=0, that is, the first loop) in the instruction queue 0 may be executed by using the execution unit E0. It may be understood that, in the first loop, the instruction queue 0 may be executed without depending on data of another queue. In other words, in this case, the second instruction queue on which the instruction queue 0 depends in the data dependency relationship indicated by the relationship identifier #0 is empty. This is equivalent to that a processing status of the second instruction queue is processing completed, that is, the second information and the first information are the same, and both are 0.

At a moment t1, execution of the instruction instr0 (loop=0) in the instruction queue 0 corresponding to the execution unit E0 is completed. Correspondingly, the control unit may extract the update instruction rel(E0, #0) at a tail of the instruction queue 0, and allocate second information corresponding to the relationship identifier #0, namely, global rel cnt++, to the instruction queue 0, that is, a value of the second information global rel cnt corresponding to the relationship identifier #0 is 1. In this case, a restriction variable get cnt=1 that is of the restriction instruction get(E1, #0) in the instruction queue 1 corresponding to the execution unit E1 and that is read by the control unit is the same as a value of the second information global rel cnt corresponding to the relationship identifier #0. It may be determined that, the processing status of the second instruction queue corresponding to the instruction queue 1, namely, the instruction queue 0, is processing completed, and the control unit may extract the restriction instruction get(E1, #0) in the instruction queue 1.

At a moment t2, the control unit reads a restriction variable get cnt=0 of the restriction instruction get(E1, #1) in the current first instruction queue, namely, the instruction queue 1 corresponding to the execution unit E1, and the second information global rel cnt=0 corresponding to the relationship identifier #1. In other words, the first information and the second information that correspond to the relationship identifier #1 are the same, and both are initial values 0, and the restriction instruction get(E1, #1) may be extracted. After the restriction instruction get(E1, #1) is extracted, two restriction instructions get(E1, #0) and get(E1, #1) before the instruction E1.instr1 in the instruction queue 1 are extracted, and the control unit may extract the instruction E1.instr1 and execute the instruction E1.instr1 by using the execution unit E1.

At a moment t3, the control unit extracts the update instruction rel(E1, #0) at the tail of the instruction queue 1 corresponding to the execution unit E1, allocates, to the instruction queue 1, second information corresponding to the relationship identifier #0, and controls the second counting unit to perform global rel cnt++ on the second information corresponding to the relationship identifier #0, that is, update the second information global rel cnt corresponding to the relationship identifier #0 to 2.

At the moment t3, a restriction variable get_cnt of the restriction instruction get(E0, #0) in the instruction queue 0 corresponding to the execution unit E0 is 2, in other words, the first information corresponding to the relationship identifier #0 is 2. The control unit determines that the first information corresponding to the relationship identifier #0 of get(E0, #0) is the same as the second information global rel cnt=2, and then extracts the restriction instruction get(E0, #0) to enter the second loop. In the loop, the instruction instr0 (Loop=1, that is, the second loop) in the instruction queue 0 is executed. A specific execution manner is similar to that in the first loop, and a difference lies in that the second information is adaptively updated.

At a moment t4, the control unit extracts the update instruction rel(E1, #1) in the instruction queue 1 corresponding to the execution unit E1, allocates, to the instruction queue 1, second information corresponding to the relationship identifier #1, and controls the second counting unit to perform global rel cnt++ on the second information corresponding to the relationship identifier #1, that is, update the global rel cnt corresponding to the relationship identifier #1 to 1. The control unit reads a restriction variable get_cnt=global get cnt=1 of the restriction instruction get(E2, #1) in the instruction queue 2 corresponding to the execution unit E2. The restriction variable is the same as the global rel cnt corresponding to the relationship identifier #1, and the restriction instruction get(E2, #1) may be extracted. In this way, the control unit executes, by using the execution unit E2, the instruction instr2 (loop=0, that is, the first loop) after the restriction instruction get(E2, #1).

At a moment t5, after completing processing in the second loop on the instruction queue 0 by using the execution unit E0, the control unit allocates, to the instruction queue 0, the second information corresponding to the relationship identifier #0, namely, global rel ent++=3. In this case, the control unit may read the restriction variable get_cnt=global get cnt=3 of the restriction instruction get(E1, #0) of the execution unit E1, and the second information global rel cnt=3 corresponding to the relationship identifier #0, where get_cnt=global rel cnt, that is, the first information and the second information that correspond to the relationship identifier #0 are the same, and the control unit may extract the restriction instruction get(E1, #0) to enter the second loop.

At a moment t6, after completing execution of the instruction instr2 after the restriction instruction get(E2, #1) in the instruction queue 2 by using the execution unit E2, the control unit may extract the update instruction rel(E2, #1) in the instruction queue 2 corresponding to the execution unit E2, and allocate the second information corresponding to the relationship identifier #1 to the instruction queue 2, that is, perform global rel ent++=2. In this case, the control unit has extracted the restriction instruction get(E1, #0) in the second loop at the moment t5. Then, the control unit may read the restriction variable get_cnt=global get cnt=2 of the restriction instruction get(E1, #1) in the instruction queue 1 corresponding to the execution unit E1, and the restriction variable is the same as the second information. Therefore, the control unit extracts the restriction instruction get(E1, #1) to enter the second loop. In the loop, the control unit executes the instruction instr1 (Loop=1, that is, the second loop) in the instruction queue 1 by using the execution unit E1.

The control unit performs execution in the foregoing manner by analogy until the task is cyclically executed for 100 times.

S504: Obtain a processing result of the task when processing of all the plurality of instruction queues is completed.

The control unit separately processes each of the plurality of instruction queues according to the foregoing steps S501 to S503, to obtain the processing result of the task when processing of all the plurality of instruction queues is completed. For example, for the task shown in Table 3, the control unit processes three instruction queues (equivalent to three subtasks) according to steps S501 to S503, and processing of all the three instruction queues is completed after the task is cyclically executed for 100 times based on an indication in the task. In this case, a processing result of the task shown in Table 3 is obtained.

It may be understood that specific tasks, instructions, and code in embodiments of this application are all examples, and do not constitute a limitation on specific forms of the tasks, instructions, and code in the task processing method provided in embodiments of this application.

In embodiments of this application, a processing status of a task is updated based on different relationship identifiers that are in the task and that indicate different data dependency relationships of the task. In this way, another task that has data dependency on the task may be directly processed based on a corresponding relationship identifier, without using a large quantity of determining statements. In addition, a restriction instruction is set at a head of an instruction queue used to implement the task. In this way, when processing of a task on which the task depends is not completed, the restriction instruction is not extracted to stall execution of the task, so as to ensure an accurate execution occasion of the task, without setting a trigger instruction and a wait instruction that are paired. It can be learned that, in this solution, asynchronous execution of tasks can be implemented without setting a large quantity of determining instructions and corresponding trigger instructions and wait instructions, to reduce load of a compiler and improve task processing efficiency. In addition, there is no need to set a large quantity of determining statements and corresponding trigger instructions and wait instructions, so that it can be ensured that code used to implement the tasks is simpler.

An embodiment further provides a computer storage medium. The computer storage medium stores computer instructions. When the computer instructions are run on an electronic device, the electronic device is enabled to perform the foregoing related method steps to implement the task processing method in the foregoing embodiments.

An embodiment further provides a computer program product. When the computer program product runs on a computer, the computer is enabled to perform the foregoing related steps to implement the task processing method in the foregoing embodiments.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Any content of embodiments of this application and any content of a same embodiment may be freely combined. Any combination of the foregoing content shall fall within the scope of this application.

A person skilled in the art should be aware that in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

## Claims

1. A task processing method, wherein the method comprises:
reading all instructions in an instruction sequence used to implement a task, and separately placing the instructions in a plurality of instruction queues that are in a one-to-one correspondence with a plurality of execution units;
determining, based on a relationship identifier corresponding to a restriction instruction at a head of a first instruction queue, a processing status of a second instruction queue on which the first instruction queue depends in a data dependency relationship indicated by the relationship identifier, wherein the first instruction queue is any one of the plurality of instruction queues, and the second instruction queue is one of the plurality of instruction queues;
when the processing status is processing completed, extracting the restriction instruction corresponding to the relationship identifier from the first instruction queue, to execute, by using an execution unit corresponding to the first instruction queue, an instruction after the restriction instruction;
updating a processing status of the first instruction queue to processing completed based on the relationship identifier when processing of the first instruction queue is completed; and
obtaining a processing result of the task when processing of all the plurality of instruction queues is completed.

2. The method according to claim 1, wherein the data dependency relationship comprises:
when execution of the first instruction queue depends on data output by the second instruction queue in the plurality of instruction queues, the data dependency relationship exists between the first instruction queue and the second instruction queue.

3. The method according to claim 1 or 2, wherein the reading all the instructions in the instruction sequence used to implement the task, and separately placing the instructions in the plurality of instruction queues that are in a one-to-one correspondence with the plurality of execution units comprises:
reading, one by one, all the instructions in the instruction sequence used to implement the task, and placing the read instructions in a target instruction queue, wherein the target instruction queue is one of the plurality of instruction queues; and
allocating, when the restriction instruction is read, first information to the restriction instruction based on the relationship identifier corresponding to the restriction instruction, wherein the first information indicates an execution order of the restriction instruction in the data dependency relationship indicated by the corresponding relationship identifier;
the updating the processing status of the first instruction queue to processing completed based on the relationship identifier when processing of the first instruction queue is completed comprises:
allocating, when processing of the first instruction queue is completed, second information corresponding to the relationship identifier to the first instruction queue, wherein the second information indicates that processing of the first instruction queue is completed, and second sequence information and first information that correspond to a same relationship identifier are allocated in a same manner; and
the determining, based on the relationship identifier corresponding to the restriction instruction at the head of the first instruction queue, the processing status of the second instruction queue on which the first instruction queue depends in the data dependency relationship indicated by the relationship identifier comprises:
reading, based on the relationship identifier corresponding to the restriction instruction at the head of the first instruction queue, the first information and the second information that correspond to the relationship identifier; and
when the read first information is the same as the read second information, determining that the processing status of the second instruction queue on which the first instruction queue depends in the data dependency relationship indicated by the relationship identifier is processing completed; or
when the read first information is different from the read second information, determining that the processing status of the second instruction queue on which the first instruction queue depends in the data dependency relationship indicated by the relationship identifier is processing uncompleted.

4. The method according to claim 3, wherein the allocating, when the restriction instruction is read, the first information to the restriction instruction based on the relationship identifier corresponding to the restriction instruction comprises:
determining, when the restriction instruction is read, the first information for the relationship identifier corresponding to the restriction instruction, and allocating the first information to the restriction instruction; and
updating, when first information is allocated to one relationship identifier each time, the first information corresponding to the one relationship identifier, for next allocation of first information to the one relationship identifier; and
the allocating, when processing of the first instruction queue is completed, the second information corresponding to the relationship identifier to the first instruction queue comprises:
determining, when processing of the first instruction queue is completed, the second information for the relationship identifier corresponding to the first instruction queue, and allocating the second information to the first instruction queue; and
updating, when second information is allocated to one relationship identifier each time, the second information corresponding to the one relationship identifier, for next allocation of second information to the one relationship identifier.

5. The method according to any one of claims 1 to 4, wherein after the extracting the restriction instruction corresponding to the relationship identifier from the first instruction queue, the method further comprises:
when an update instruction corresponding to the relationship identifier is extracted from the first instruction queue, determining that processing of the first instruction queue is completed, wherein the update instruction corresponding to the relationship identifier is located at a tail of the first instruction queue.

6. The method according to claim 4, wherein the determining the first information for the relationship identifier corresponding to the restriction instruction comprises:
reading a first counting result of a first counting unit for the relationship identifier corresponding to the restriction instruction, to obtain the first information;
the updating, when the first information is allocated to the one relationship identifier each time, the first information corresponding to the one relationship identifier, for next allocation of first information to the one relationship identifier comprises:
controlling, when the first information is allocated to the one relationship identifier each time, the first counting unit to perform counting based on the allocated first counting result, to obtain updated first information corresponding to the one relationship identifier, for next allocation of first information to the one relationship identifier;
the determining, when processing of the first instruction queue is completed, the second information for the relationship identifier corresponding to the first instruction queue, and allocating the second information to the first instruction queue comprises:
reading a second counting result of a second counting unit for the relationship identifier corresponding to the first instruction queue, to obtain the second information; and
the updating, when the second information is allocated to the one relationship identifier each time, the second information corresponding to the one relationship identifier, for next allocation of second information to the one relationship identifier comprises:
controlling, when the second information is allocated to the one relationship identifier each time, the second counting unit to perform counting based on the allocated second counting result, to obtain updated second information corresponding to the one relationship identifier, for next allocation of second information to the one relationship identifier.

7. A chip, wherein the chip comprises a control unit, a plurality of execution units, and a plurality of queue placement units that are in a one-to-one connection to the plurality of execution units, and the plurality of queue placement units are separately connected to the control unit;
the control unit is configured to: read all instructions in an instruction sequence used to implement a task, and separately place the instructions in a plurality of instruction queues, wherein the plurality of instruction queues are placed in the plurality of queue placement units one by one;
the queue placement unit is configured to place an instruction queue corresponding to the connected execution unit;
the control unit is further configured to: determine, based on a relationship identifier corresponding to a restriction instruction at a head of a first instruction queue, a processing status of a second instruction queue on which the first instruction queue depends in a data dependency relationship indicated by the relationship identifier, wherein the first instruction queue is any one of the plurality of instruction queues, and the second instruction queue is one of the plurality of instruction queues; and when the processing status is processing completed, extract the restriction instruction corresponding to the relationship identifier from the first instruction queue, to execute, by using an execution unit corresponding to the first instruction queue, an instruction after the restriction instruction;
the execution unit is configured to process, under scheduling of the control unit, the instruction queue in the queue placement unit connected to the execution unit; and
the control unit is further configured to: update a processing status of the first instruction queue to processing completed based on the relationship identifier when processing of the first instruction queue is completed; and obtain a processing result of the task when processing of all the plurality of instruction queues is completed.

8. The chip according to claim 7, wherein the control unit is specifically configured to:
read, one by one, all the instructions in the instruction sequence used to implement the task, and place the read instructions in a target instruction queue, wherein the target instruction queue is one of the plurality of instruction queues;
allocate, when the restriction instruction is read, first information to the restriction instruction based on the relationship identifier corresponding to the restriction instruction, wherein the first information indicates an execution order of the restriction instruction in the data dependency relationship indicated by the corresponding relationship identifier;
allocate, when processing of the first instruction queue is completed, second information corresponding to the relationship identifier to the first instruction queue, wherein the second information indicates that processing of the first instruction queue is completed, and second sequence information and first information that correspond to a same relationship identifier are allocated in a same manner;
read, based on the relationship identifier corresponding to the restriction instruction at the head of the first instruction queue, first information and second information that correspond to the relationship identifier; and
when the read first information is the same as the read second information, determine that the processing status of the second instruction queue on which the first instruction queue depends in the data dependency relationship indicated by the relationship identifier is processing completed; or
when the read first information is different from the read second information, determine that the processing status of the second instruction queue on which the first instruction queue depends in the data dependency relationship indicated by the relationship identifier is processing uncompleted.

9. The chip according to claim 8, wherein the control unit is specifically configured to:
determine, when the restriction instruction is read, the first information for the relationship identifier corresponding to the restriction instruction, and allocate the first information to the restriction instruction; and
update, when first information is allocated to one relationship identifier each time, the first information corresponding to the one relationship identifier, for next allocation of first information to the one relationship identifier; and
allocating, when processing of the first instruction queue is completed, the second information corresponding to the relationship identifier to the first instruction queue comprises:
determining, when processing of the first instruction queue is completed, the second information for the relationship identifier corresponding to the first instruction queue, and allocating the second information to the first instruction queue; and
updating, when second information is allocated to one relationship identifier each time, the second information corresponding to the one relationship identifier, for next allocation of second information to the one relationship identifier.

10. The chip according to any one of claims 7 to 9, wherein the control unit is further configured to:
after the restriction instruction corresponding to the relationship identifier is extracted from the first instruction queue, when an update instruction corresponding to the relationship identifier is extracted from the first instruction queue, determine that processing of the first instruction queue is completed, wherein the update instruction corresponding to the relationship identifier is set at a tail of the first instruction queue.

11. The chip according to claim 8, wherein the chip further comprises a first counting unit and a second counting unit that are separately connected to the control unit;
the first counting unit is configured to perform, under control of the control unit, counting in a preset counting manner to obtain a first counting result;
the second counting unit is configured to perform, under control of the control unit, counting in the preset counting manner to obtain a second counting result; and
the control unit is specifically configured to:
read the first counting result of the first counting unit for the relationship identifier corresponding to the restriction instruction, to obtain the first information; and control, when the first information is allocated to the one relationship identifier each time, the first counting unit to perform counting based on the allocated first counting result, to obtain updated first information corresponding to the one relationship identifier, for next allocation of first information to the one relationship identifier; and
read the second counting result of the second counting unit for the relationship identifier corresponding to the first instruction queue, to obtain the second information; and control, when the second information is allocated to the one relationship identifier each time, the second counting unit to perform counting based on the allocated second counting result, to obtain updated second information corresponding to the one relationship identifier, for next allocation of second information to the one relationship identifier.

12. A task processing system, wherein the system comprises a control unit, a plurality of execution units, and a plurality of queue placement units that are in a one-to-one connection to the plurality of execution units, the plurality of queue placement units are separately connected to the control unit, the control unit and the plurality of queue placement units are comprised in a first chip, and the plurality of execution units are separately comprised in at least one second chip;
the control unit is configured to: read all instructions in an instruction sequence used to implement a task, and separately place the instructions in a plurality of instruction queues, wherein the plurality of instruction queues are placed in the plurality of queue placement units one by one;
the queue placement unit is configured to place an instruction queue corresponding to the connected execution unit;
the control unit is further configured to: determine, based on a relationship identifier corresponding to a restriction instruction at a head of a first instruction queue, a processing status of a second instruction queue on which the first instruction queue depends in a data dependency relationship indicated by the relationship identifier, wherein the first instruction queue is any one of the plurality of instruction queues, and the second instruction queue is one of the plurality of instruction queues; and when the processing status is processing completed, extract the restriction instruction corresponding to the relationship identifier from the first instruction queue, to execute, by using an execution unit corresponding to the first instruction queue, an instruction after the restriction instruction;
the execution unit is configured to process, under scheduling of the control unit, the instruction queue in the queue placement unit connected to the execution unit; and
the control unit is further configured to: update a processing status of the first instruction queue to processing completed based on the relationship identifier when processing of the first instruction queue is completed; and obtain a processing result of the task when processing of all the plurality of instruction queues is completed.

13. The system according to claim 12, wherein the control unit is specifically configured to:
read, one by one, all the instructions in the instruction sequence used to implement the task, and place the read instructions in a target instruction queue, wherein the target instruction queue is one of the plurality of instruction queues;
allocate, when the restriction instruction is read, first information to the restriction instruction based on the relationship identifier corresponding to the restriction instruction, wherein the first information indicates an execution order of the restriction instruction in the data dependency relationship indicated by the corresponding relationship identifier;
allocate, when processing of the first instruction queue is completed, second information corresponding to the relationship identifier to the first instruction queue, wherein the second information indicates that processing of the first instruction queue is completed, and second sequence information and first information that correspond to a same relationship identifier are allocated in a same manner;
read, based on the relationship identifier corresponding to the restriction instruction at the head of the first instruction queue, the first information and the second information that correspond to the relationship identifier; and
when the read first information is the same as the read second information, determine that the processing status of the second instruction queue on which the first instruction queue depends in the data dependency relationship indicated by the relationship identifier is processing completed; or
when the read first information is different from the read second information, determine that the processing status of the second instruction queue on which the first instruction queue depends in the data dependency relationship indicated by the relationship identifier is processing uncompleted.

14. The system according to claim 13, wherein the control unit is specifically configured to:
determine, when the restriction instruction is read, the first information for the relationship identifier corresponding to the restriction instruction, and allocate the first information to the restriction instruction; and
update, when first information is allocated to one relationship identifier each time, the first information corresponding to the one relationship identifier, for next allocation of first information to the one relationship identifier; and
allocating, when processing of the first instruction queue is completed, the second information corresponding to the relationship identifier to the first instruction queue comprises:
determining, when processing of the first instruction queue is completed, the second information for the relationship identifier corresponding to the first instruction queue, and allocating the second information to the first instruction queue; and
updating, when second information is allocated to one relationship identifier each time, the second information corresponding to the one relationship identifier, for next allocation of second information to the one relationship identifier.

15. The system according to any one of claims 12 to 14, wherein the control unit is further configured to:
after the restriction instruction corresponding to the relationship identifier is extracted from the first instruction queue, when an update instruction corresponding to the relationship identifier is extracted from the first instruction queue, determine that processing of the first instruction queue is completed, wherein the update instruction corresponding to the relationship identifier is set at a tail of the first instruction queue.

16. The system according to claim 13, wherein the chip further comprises a first counting unit and a second counting unit that are separately connected to the control unit;
the first counting unit is configured to perform, under control of the control unit, counting in a preset counting manner to obtain a first counting result;
the second counting unit is configured to perform, under control of the control unit, counting in the preset counting manner to obtain a second counting result; and
the control unit is specifically configured to:
read the first counting result of the first counting unit for the relationship identifier corresponding to the restriction instruction, to obtain the first information; and control, when the first information is allocated to the one relationship identifier each time, the first counting unit to perform counting based on the allocated first counting result, to obtain updated first information corresponding to the one relationship identifier, for next allocation of first information to the one relationship identifier; and
read the second counting result of the second counting unit for the relationship identifier corresponding to the first instruction queue, to obtain the second information; and control, when the second information is allocated to the one relationship identifier each time, the second counting unit to perform counting based on the allocated second counting result, to obtain updated second information corresponding to the one relationship identifier, for next allocation of second information to the one relationship identifier.

17. An electronic device, comprising:
a processor and a transceiver, and
a memory, configured to store one or more programs, wherein
when the one or more programs are executed by the one or more processors, the one or more processors are enabled to implement the method according to any one of claims 1 to 6.

18. A computer-readable storage medium, comprising a computer program, wherein when the computer program is run on an electronic device, the electronic device is enabled to perform the method according to any one of claims 1 to 6.

19. A computer program product, comprising a computer program, wherein when the computer program is executed by an electronic device, the electronic device is enabled to perform the method according to any one of claims 1 to 6.
